## Europäisches Patentamt
## European Patent Office
## Office européen des brevets

(11) Veröffentlichungsnummer: **0 141 398**
**B1**

(12) **EUROPÄISCHE PATENTSCHRIFT**

(19)

(45) Veröffentlichungstag der Patentschrift:
**13.07.88**

(21) Anmeldenummer: **84113064.4**

(22) Anmeldetag: **30.10.84**

(51) Int. Cl.⁴: **B 62 B 3/10**

(54) **Stapelbarer Einkaufswagen.**

(30) Priorität: 05.11.83 DE 8331746 U
15.05.84 DE 8414815 U
12.09.84 DE 8426844 U
06.10.84 DE 8429434 U
19.10.84 DE 8430771 U

(43) Veröffentlichungstag der Anmeldung:
**15.05.85 Patentblatt 85/20**

(45) Bekanntmachung des Hinweises auf die Patenterteilung:
**13.07.88 Patentblatt 88/28**

(84) Benannte Vertragsstaaten:
**DE FR GB NL SE**

(56) Entgegenhaltungen:
**DE - A - 2 742 958**
**FR - A - 2 523 060**
**US - A - 3 112 934**

(73) Patentinhaber: **Rudolf Wanzl GmbH & Co. KG,**
**Herrenbreite 4, D-8874 Leipheim (DE)**

(72) Erfinder: **Koller, Alois, Schwalbenstrasse 1,**
**D-7924 Steinheim (DE)**
Erfinder: **Wanzl, Rudolf, Sonnenweg 8, D-8874 Leipheim**
**(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen stapelbaren Einkaufswagen, im wesentlichen bestehend aus einem Fahrgestell und einem auf dem Fahrgestell aufgesetzten, eine Schiebeeinrichtung aufweisenden Korb, dessen Rückwand in das Korbinnere verschwenkbar ist, wobei an dem der Schiebeeinrichtung zugeordneten Ende des Einkaufswagens eine aus einer Nichtgebrauchslage in eine rückwärtige Gebrauchslage und umgekehrt bewegbare, mit einer Abstellfläche ausgestattete Ablage zum Abstellen grösserer Gegenstände vorgesehen ist (wie dies schon aus der US-A 2 890 058 bekannt ist).

Um Ladendiebstahl einzuschränken, wurden in jüngster Zeit Einkaufswagen gebaut, die keine untere Ablage aufweisen. Bei solchen Wagen ist man gezwungen, grössere Gegenstände wie Getränkekisten oder Waschmittelschachteln im Korb unterzubringen. Dort nehmen diese Gegenstände natürlich sehr viel Platz weg. Ausserdem ist es umständlich, Getränkekisten beim Kauf zuerst in den Korb zu hieven, sie an der Kasse erneut in einen anderen Wagen umzusetzen und sie schliesslich, am geparkten Auto angekommen, wieder aus dem Korb zu heben. Solche Einkaufswagen sind z.B. in der DE-A 3 101 844 näher beschrieben.

Eine bekannte Verbesserung, wie sie etwa durch das DE-V 8 136 236 offenbart ist, zielt dahin, Getränkekisten auf die ausgeklappte Rückwand und auf das hintere Korbende zu setzen. Dies hat den Nachteil, dass ein Kind nicht mehr im Kindersitz mitgeführt werden kann, da der Kindersitz durch die Kiste verdeckt wird. Ausserdem wird die Sicht der den Einkaufswagen schiebenden Person durch die hoch angeordnete Getränkekiste beeinträchtigt.

Durch die DE-A 2 742 958 sind Einkaufswagen bekannt, die einen auf einem Fahrgestell befestigten Warenkorb und mindestens eine ausserhalb des Warenkorbes vorgesehene Abstellfläche aufweisen, wobei mindestens ein wesentlicher Teil dieser Abstellfläche vor und/oder hinter dem Warenkorb gelegen ist. Bei zwei Ausführungsbeispielen sind die Abstellflächen als bewegbare Ablagen so gestaltet, dass sie sich von Hand entweder aus dem Korb nach rückwärts herausklappen oder aus der Korbbodenebene oder aus der Fahrgestellebene herausziehen und ebenfalls von Hand wieder in ihre Nichtgebrauchslage zurückbewegen lassen. In der genannten Druckschrift findet sich wohl der Hinweis, dass derart gestaltete Einkaufswagen ineinanderschiebbar sind. Konkrete Hinweise jedoch, wie sich dies technisch und konstruktiv verwirklichen lässt, vermisst man. So kann man z.B. bei dem in Fig. 3 dieser Druckschrift gezeigten Einkaufswagen nur anhand der Zeichnung vermuten, dass sich solche Einkaufswagen ineinanderschieben lassen. Die Abstellroste behindern auf jeden Fall durch zusätzliche Rauminanspruchnahme den Einschiebevorgang, so dass sich diese Einkaufswagen wohl ein Stück weit, jedoch nie ganz so eng ineinanderschieben lassen, wie dies bei gleichen Einkaufswagen, die keine Abstellroste aufweisen, der Fall ist.

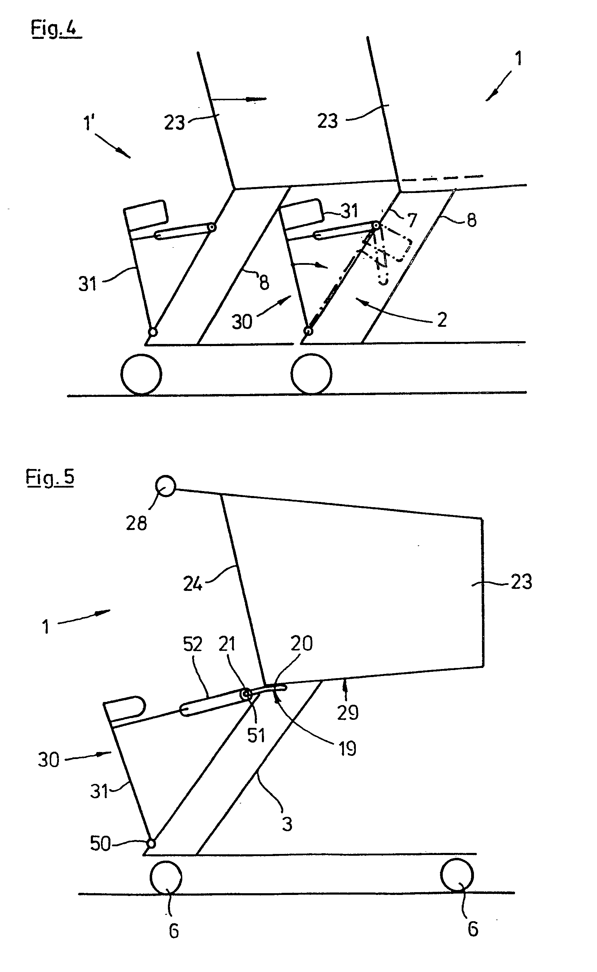

Auch der in Fig. 4 beschriebene Einkaufswagen lässt ein engstmögliches Stapeln nicht zu. Hier besteht sogar die Befürchtung, dass der oder die Ablageroste beim Ineinanderschieben entweder nicht von selbst in ihre platzsparende Nichtgebrauchslage gedrückt werden oder dass sie beim Auseinanderschieben zweier Einkaufswagen von selbst in ihre Gebrauchslage fallen und dabei sich entweder mit der Rückwand oder mit dem Korb dann verhaken, wenn zumindest der Warenkorb wie üblich aus Drahtgitterrosten gefertigt ist.

Schliesslich lässt auch der in Fig. 6 dieser Druckschrift angezeigte Einkaufswagen ein optimales Stapeln mit gleichgearteten Einkaufswagen nicht zu. Folgt man wiederum der Zeichnung, so drückt der vordere ausgefahrene Abstellrost eines hinteren einzuschiebenden Einkaufswagens den hinteren Abstellrost eines vorausbefindlichen Einkaufswagens nach vorne. Gleichzeitig wird der vordere Abstellrost des hinteren Einkaufswagens nach hinten ein Stück weit unter den Warenkorb geschoben. Im Idealfall treffen sich beide Abstellroste in der Mitte. Dies bedeutet aber, dass sich mehr als zwei solcher Einkaufswagen überhaupt nicht platzsparend ineinanderschieben lassen, denn ein vorderer Abstellrost eines dritten rückwärtigen Einkaufswagens würde dann beim Einfahren in den zweiten rückwärtigen Einkaufswagen an den hinteren, etwa in der Mitte des Fahrgestelles befindlichen Abstellrost des zweiten Einkaufswagens anstossen. Da sich dieser Effekt auch bei allen weiteren nachfolgend einzuschiebenden Einkaufswagen wiederholt, ist es unmöglich, solche Einkaufswagen optimal platzsparend ineinanderzuschieben. Den genannten Einkaufswagen haftet ferner der Nachteil an, dass sie relativ gross gebaut werden müssen und sich daher schlecht rangieren lassen, wobei in der Regel ausgeklappte Ablagen beim Ineinanderschieben mehrerer Einkaufswagen erst von Hand wieder in ihre Nichtgebrauchslage gebracht werden müssen. Dies wird jedoch von den wenigsten Wagenbenützern beim Abstellen der Einkaufswagen gemacht. Der Abstellraum solcher Wagen ist deshalb sehr gross.

Gemäss der US-A 2 890 058 ist ein Einkaufswagen bekannt, der entsprechend einem kurz angedeuteten Ausführungsbeispiel an seinem rückwärtigen Ende eine um eine waagrechte Achse nach oben verschwenkbare Ablage aufweist. Folgt man der Zeichnung, so ist es nicht möglich, mehrere Einkaufswagen platzsparend ineinanderzuschieben, wenn die Ablagen nach oben geschwenkt sind. Bei diesen Wagen muss man die Ablage zuerst von Hand nach unten schwenken, will man mehrere Einkaufswagen platzsparend stapeln. Unterlässt man dies, lassen sich solche Wagen überhaupt nicht ineinanderschieben, da die Korbstirnseite eines einzuschiebenden Einkaufswagens zwangsläufig an die nach oben geschwenkte Ablage des vorausbefindlichen Einkaufswagens anstösst. Dies führt zusätzlich noch zu Beschädigungen an Korb und Ablage. Hinweise darüber, wie sich die eben geschilderten Nachteile vermeiden liessen, sind der erwähnten Druckschrift jedoch nicht zu entnehmen.

Der Erfindung liegt daher die Aufgabe zugrunde, einen gattungsgemässen Einkaufswagen zu schaffen, der die genannten Nachteile und Unzulänglichkeiten vermeidet. Angestrebt wird ein Einkaufswagen, bei dem grosse Gegenstände, ganz besonders jedoch Getränkekisten, bequem ausserhalb des Korbes so untergebracht werden können, dass diese nicht über den oberen Korbrand gehoben werden müssen, dass sie ferner von den Kassiererinnen ohne Mühe beim Abrechnen der Ware erkennbar sind, dass die Ablage am Einkaufswagen so vorgesehen und gestaltet ist, dass beim Ineinanderschieben zweier Einkaufswagen der Stapeltotraum der gleiche ist, wie bei gleichen Einkaufswagen, die keine Ablagen aufweisen und dass überhaupt die bekannten vorteilhaften Funktionen des Einkaufswagens nicht nachteilig beeinflusst werden. Zu diesen bekannten Funktionen zählen z.B. das bequeme Be- und Entladen des Korbes, das zweckmässige und sichere Unterbringen eines Kindes im Kindersitz sowie der Umstand, dass man zum Zwekke des platzsparenden Stapelns die Einkaufswagen einfach am Griff nimmt und ineinanderschiebt, ohne zusätzlich die Ablage in die Hand zu nehmen.

Die Aufgabe wird durch die kennzeichnenden Merkmale des Anspruches 1 gelöst.

Die Ablage befindet sich beim erfindungsgemässen Einkaufswagen bevorzugt an den hinteren Stützen des Fahrgestelles und lässt sich aus einer Ruhelage, in der sie an den Stützen anliegt, bequem in eine nach rückwärts vom Einkaufswagen wegragende Gebrauchslage schwenken, wobei der Schwenkbereich nach rückwärts durch das Halteteil begrenzt wird. In dieser Lage kann z.B. eine Getränkekiste gut aufgesetzt werden. Auch andere grosse Gegenstände, etwa Waschmittelbehälter, WC-Papier usw. lassen sich gut abstellen. Wenn man mehrere Einkaufswagen ineinanderschiebt, also stapelt, drücken die Stützen des jeweils hinteren Einkaufswagens die Ablage des jeweils vorderen Einkaufswagens von selbst in die raumsparende Nichtgebrauchslage. Man muss die Ablage nur bei deren Gebrauch von Hand aus der Nichtgebrauchslage in die Gebrauchslage bewegen. Dies erleichtert die Handhabung einer derartigen Ablage natürlich ausserordentlich. Es ist zweckmässig, die Ladefläche der Ablage rechtwinklig zur Rückwand des Korbes anzuordnen. Es ist dann möglich, einen kasten- oder schachtelförmigen Gegenstand ganz nahe an die Rückwand anzuschmiegen. Es wird dadurch weder die Standsicherheit des Einkaufswagens, noch die Beinfreiheit einer den Einkaufswagen schiebenden Person sonderlich beeinträchtigt. Durch die zweckmässige Anordnung der Ablage brauchen grosse Gegenstände nicht mehr über den oberen Korbrand gehoben zu werden. Ausserdem sind die Gegenstände höher und sichtbarer plaziert, als auf den bisher unteren Ladeflächen bekannter Einkaufswagen, so dass die auf der Ablage abgestellten Gegenstände von den Kassiererinnen an der Kasse sofort gesehen und mit abgerechnet werden können.

Im Rahmen einer Ausgestaltung der Erfindung ist bei einem Einkaufswagen, dessen Fahrgestell im wesentlichen aus zwei nach oben gekrümmten Trägern besteht, die Querverstrebung des in Nichtgebrauchslage befindlichen Schwenkteiles der Ablage höher angeordnet, als die sich in Seitenansicht ergebende Schnittfläche der Träger zweier ineinandergeschobener Einkaufswagen.

Der besondere Vorteil besteht bei diesem Ausführungsbeispiel darin, dass durch das Anordnen der Querverstrebung der Ablagen über den Schnittflächen der jeweiligen Träger die Form der Träger im Grunde beliebig gestaltbar bleibt. Dies bedeutet, dass die Schenkel der Träger so verlaufen können, dass auf sie gelegte Ware nicht liegenbleibt. Ein Herausschmuggeln unbezahlter Ware aus dem Geschäft wird somit wesentlich erschwert. Ein weiterer und ganz entscheidender Vorteil ist ferner darin erkennbar, dass durch die äusserst zweckmässige Plazierung der Querverstrebung der Ablage die Einkaufswagen weitmöglichst ineinandergeschoben werden können, weil sich die Ablage eines vorausbefindlichen Einkaufswagens komplett ausserhalb jenes Raumes befindet, der von einem rückwärts in den vorderen Einkaufswagen einzuschiebenden weiteren Einkaufswagen beansprucht wird. Der erfindungsgemässe Einkaufswagen bietet also grösstmöglichen Schutz gegen Warendiebstahl gepaart mit optimalen Handhabungseigenschaften bei gleichzeitigem Vorhandensein einer Ablage für Getränkekisten oder grossvolumige Gegenstände.

Die Erfindung wird anhand von zwei bevorzugten Grundmodellen näher erläutert. Es zeigt

Fig. 1 einen Einkaufswagen, dessen Fahrgestell je zwei nach oben gerichtete Träger aufweist;

Fig. 2 einen Einkaufswagen, dessen Fahrgestell im wesentlichen aus zwei nach oben gekrümmten Trägern besteht;

Fig. 3 einen Einkaufswagen gemäss Fig. 1;

Fig. 4 zwei Einkaufswagen gemäss Fig. 1 während des Stapelvorganges;

Fig. 5 und 6 einen Einkaufswagen, ähnlich jenem wie in Fig. 1 gezeigt;

Fig. 7 einen Einkaufswagen gemäss Fig. 3;

Fig. 8 zwei Einkaufswagen entsprechend Fig. 7 während des Stapelvorganges.

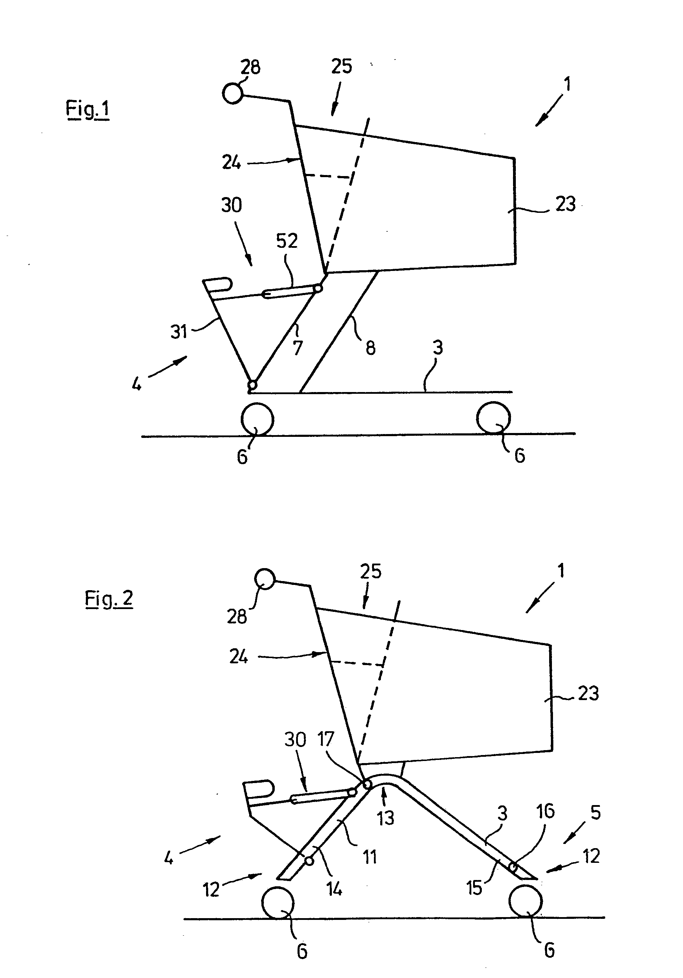

Der Einkaufswagen 1 entsprechend Fig. 1 besteht in üblicher Weise aus einem nach vorne sich verengenden, also konischen Fahrgestell 3 mit vier Rollen 6. An dem der Schiebeeinrichtung 28 zugeordneten Ende 4 des Fahrgestelles 3 sind zum Fahrgestell 3 gehörende, zu beiden Seiten des Fahrgestelles 3 schräg nach oben strebende Träger 7, 8 vorgesehen, die einen Korb 23 zur Aufnahme von Einkaufsgut tragen. Der Korb 23 verengt sich in bekannter Weise ebenfalls nach vorne, besitzt also konische Form und weist an seinem hinteren Ende eine Rückwand 24 auf, die gemäss bekannter Ausführung um eine oben liegende waagrechte Achse aus einer das hintere Korbende verschliessende Lage in das Korbinnere verschwenkbar ist. Die Rückwand 24 kann sowohl als einfache ebene Gitterwand, als auch als doppelte Klappe mit einer Sitzfläche zur Bildung eines bekannten Kindersitzes 25 gestaltet sein. Nach rückwärts schliesst der Korb 23 mit einer Schiebeeinrichtung 28 in Form eines Handgriffes ab. Der Korb 23 ist fest mit dem Fahrgestell 3 verbunden. An dem der Schiebeeinrichtung 28 des Fahrgestelles 3 zugeordneten Ende 4 ist eine bewegliche Ablage 30 zur Aufnahme grossvolumiger Gegenstände vorgesehen.

Der in Fig. 2 gezeigte Einkaufswagen 1 besteht aus einem sich in Fahrtrichtung verjüngenden Fahrgestell 3, das im wesentlichen aus zwei Trägern 11 besteht, die nach oben gekrümmt sind. Die Schenkel 14, 15 der gewöhnlich aus Rohren oder aus Drähten gebildeten Träger 11 streben in verschiedenen Richtungen schräg nach unten, wobei es gleichgültig ist, ob die Träger 11 an ihren Enden 12 schräg oder senkrecht auf die an den Enden 12 befindlichen Rollen 6 zulaufen. Ebenso ist es gleichgültig, ob die obere Krümmung 13 der Träger 11, wie gezeichnet, bogenförmig gestaltet ist, oder aus zwei Teilkrümmungen, die durch einen geraden Abschnitt miteinander verbunden sind, besteht. Die Träger 11 können aus Stabilitätsgründen mit wenigstens einer Querstrebe miteinander verbunden sein. Zweckmässig ist es, im vorderen Bereich 5 des Fahrgestelles 3 eine Querstrebe 16 vorzusehen und im Bereich der Krümmung 13 eine weitere Querstrebe 17 anzuordnen. Das Fahrgestell 3 trägt einen ebenfalls in Fahrtrichtung sich verjüngenden Korb 23, der mit geeigneten Befestigungsmitteln im Bereich der Krümmung 13 mit dem Fahrgestell 3 verbunden ist. Am oberen rückwärtigen Ende des Korbes 23 befindet sich eine Schiebeeinrichtung 28 in Form eines Handgriffes. In bekannter Weise schliesst sich das hintere Ende des Korbes 23 mit einer als Rückwand 24 ausgebildeten Klappe ab, die sich zum Zwecke der Ineinanderschiebbarkeit mehrerer gleicher Einkaufswagen 1, 1' um eine waagrechte Achse nach oben in das Korbinnere verschwenken lässt. Die Rückwand 24 kann bekanntermassen einen Kindersitz 25 aufweisen. An dem der Schiebeeinrichtung 28 zugeordneten Ende 4 des Fahrgestelles 3 ist wiederum eine bewegliche Ablage 30 zum Abstellen grossformatiger Gegenstände vorgesehen.

Die in den Figuren 1 und 2 gezeigten Einkaufswagen 1 sind stellvertretend für alle nachfolgenden Ausführungsbeispiele beschrieben. Auf eine weitere Beschreibung von Fahrgestell 3 und Korb 23 wird deshalb bei allen weiteren Ausführungsbeispielen verzichtet.

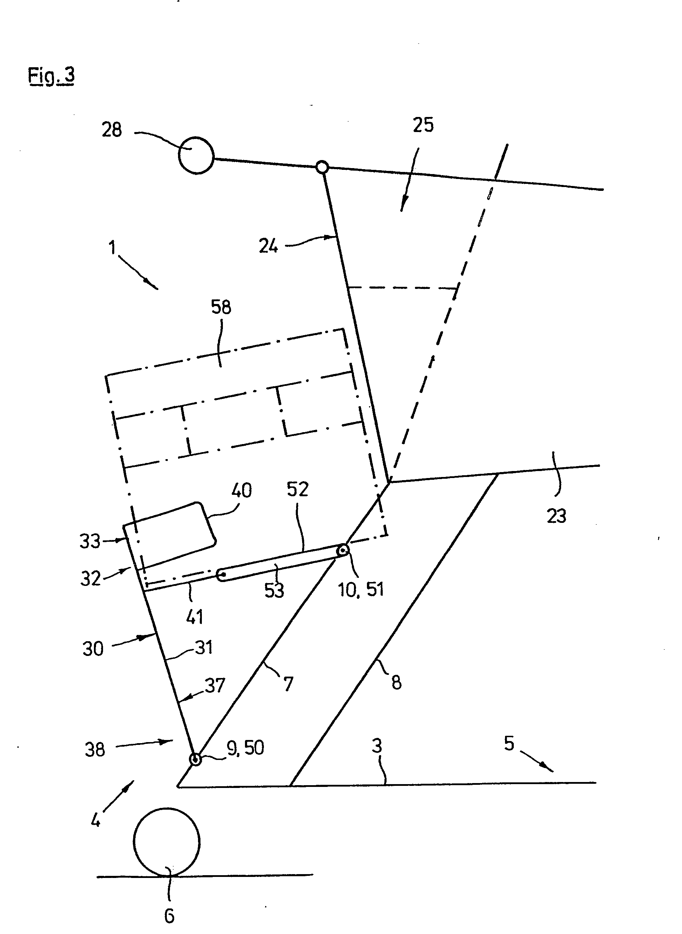

Fig. 3 zeigt in Seitenansicht einen Einkaufswagen 1 entsprechend Fig. 1. Die Ablage 30 ist im Beispiel bevorzugt an den beiden hinteren Trägern 7 befestigt. Sie besteht aus einem Schwenkteil 31, das zwei auf Abstand gehaltene Streben 37 besitzt, die mit ihren unteren Enden 38 schlaufenartig um einen als waagrechte Achse 50 vorgesehenen Querstab 9, der die beiden hinteren Träger 7 verbindet, gebogen sind. Der Querstab 9 ist höher angeordnet, als der vordere bevorzugt waagrechte Bereich 5 des Fahrgestelles 3. Die Streben 37 und damit das Schwenkteil 31 lassen sich somit radial um die waagrechte Achse 50 bewegen. Im oberen Bereich 32 des Schwenkteiles 31 ist ein bevorzugt als Gitterrost oder Bügel gestalteter Ablageabschnitt 41 vorgesehen, welcher zum vorderen Ende des Einkaufswagens 1 gerichtet ist und der in Gebrauchslage eine bevorzugt rechtwinklig zur Rückwand 24 angeordnete Lage einnimmt. An seinem oberen Ende 33 besitzt das Schwenkteil 31 zu beiden Seiten seitliche Anschläge 40, welche verhindern, dass ein auf die Ablage 30 gestellter Gegenstand seitlich herabfällt. Das Innenmass der seitlichen Anschläge 40 zueinander ist im Beispiel geringfügig grösser, als das Aussenmass der rechten und linken Stützen 7, 8 zueinander, so dass diese von den seitlichen Anschlägen 40 von aussen dann umgriffen werden, wenn das Schwenkteil 31 in Nichtgebrauchslage an den Stützen 7 anliegt, vgl. Fig. 4. Die seitlichen Anschläge 40 können aber auch nur so weit voneinander entfernt sein, dass sie in Ruhelage der Ablage 30 zwischen den Stützen 7, 8 zu liegen kommen.

Über dem als Achse 50 dienenden Querstab 9 ist ein weiterer die hinteren Stützen 7 verbindender Querstab 10 vorgesehen, an welchen bevorzugt um eine waagrechte Achse 51 drehbar, mindestens ein Halteteil 52, etwa in Form eines Gitterrostes oder Bügels angeordnet ist, das, wie im Beispiel gezeigt, eine Schiebeöffnung 53 aufweist, in welcher der Ablageabschnitt 41 entlang der Fahrtrichtung schiebebeweglich geführt ist. Das Halteteil 52 nimmt dabei in Gebrauchslage der Ablage 30 ebenfalls jene Lage ein, die im wesentlichen einen rechten Winkel zur Rückwand 24 bildet. Durch den Ablageabschnitt 41 und durch das Halteteil 52 ist somit eine gemeinsame Abstellfläche, beispielsweise für eine Getränkekiste 58 geschaffen. Es ist somit möglich und wie in der Zeichnung strichpunktiert angedeutet, eine Getränkekiste 58 ganz nahe an der Rückwand 24 plaziert, auf die Ablage 30 zu setzen.

Das Halteteil 52 muss nicht unbedingt eine Schiebeführung 53 aufweisen. Dies erübrigt sich beispielsweise dann, wenn das Halteteil 52 als Kunststoffseil oder als Kette ausgebildet ist. In diesem Falle sind zwei Seile oder Ketten sinnvoll. Die Verbindung des Halteteiles 52 mit dem Schwenkteil 31 ist dann gelenkiger Art, wobei in solchem Falle eine gemeinsame Auflagefläche durch den Ablageabschnitt 41 und den Querstab 10 gebildet ist. Ebenso ist es denkbar, das Halteteil 52 als wenigstens ein starres Teil auszubilden, das sowohl gelenkig mit dem Querstab 10, als auch gelenkig mit dem Ablageabschnitt 41 verbunden ist, wobei allerdings der Ablageabschnitt 41 mit den Streben 37 des Schwenkteiles 31 ebenfalls um eine waagrechte Achse drehbar verbunden sein muss. Ablageabschnitt 41 und Halteteil 52 müssten dann in bekannter Weise stumpfwinklig zueinander angeordnet sein, damit das Schwenkteil 31 bewegt werden kann.

Fig. 4 zeigt, wie beim Ineinanderschieben zweier Einkaufswagen 1, 1' die Ablage 30 des vorderen Einkaufswagens 1 durch die vorderen Träger 8 des hinteren Einkaufswagens 1' aus der Gebrauchslage in die Ruhelage, strichpunktiert gezeichnet, gedrückt wird. Die Ablage 30 ist so angeordnet, dass sie vom Korb 23 des rückwärtigen Einkaufswagens 1' nicht berührt wird. Die vorderen Träger 8 des hinteren Einkaufswagens 1' verfehlen die Ablage 30 des vorderen Einkaufswagens 1 nicht, da der Korb 23 des hinteren Einkaufswagens 1' bereits in den Korb 23 des vorderen Einkaufswagens 1 eintaucht. Zieht man beide Einkaufswagen 1, 1' wieder auseinander, verbleibt die Ablage 30 des vorderen Einkaufswagens 1 in ihrer an den Trägern 7 anliegenden Nichtgebrauchslage. Zum Gebrauch muss nur das Schwenkteil 31 herausgeklappt werden. In der Zeichnung erkennt man, dass die zur Ablage 30 gehörenden Teile in Nichtgebrauchslage im wesentlichen in jenem Raum 2 platzsparend untergebracht sind, der von den Stützen 7, 8 eingenommen wird. Dies bedeutet, dass sich bei Ruhelage der Ablage 30 der Einkaufswagen 1 genau so gut bewegen und handhaben lässt, wie bekannte Einkaufswagen ohne Ablage 30.

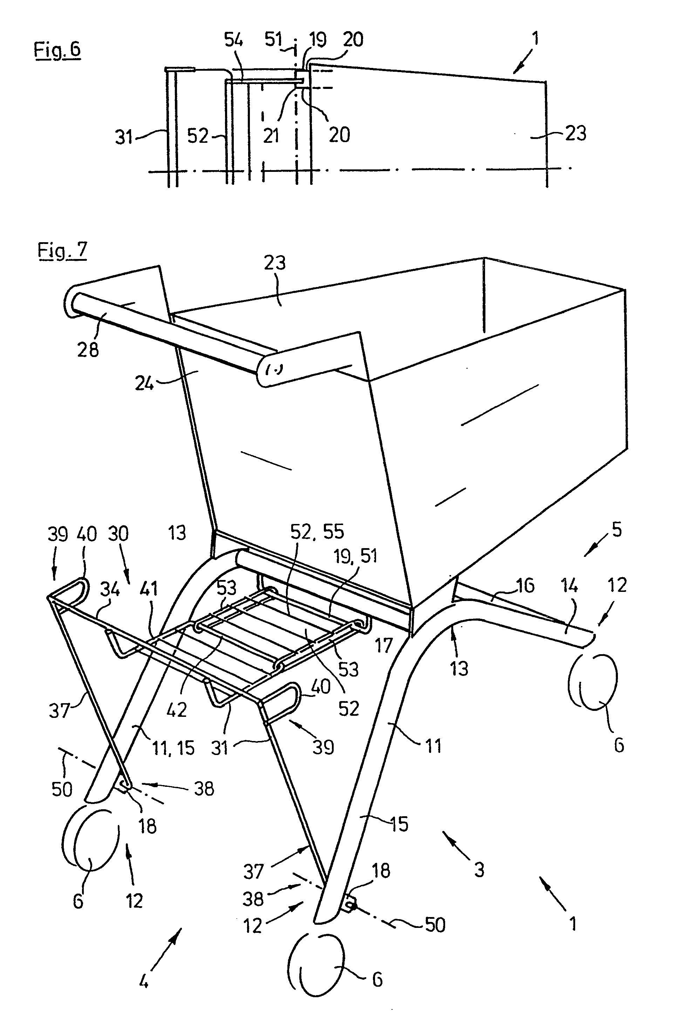

Fig. 5 und 6 zeigen die Ablage 30, welche wiederum aus einem Schwenkteil 31 und wenigstens einem Halteteil 52 besteht, die gelenkig oder schiebebeweglich miteinander in Verbindung stehen. Das Schwenkteil 31 ist auf einer quer zur Fahrtrichtung angeordneten, im unteren Bereich des Fahrgestelles 3 vorgesehenen Achse 50 schwenkbar gelagert. Das Halteteil 52 ist im Beispiel an zwei aus Schlaufen gefertigten Achsstücken 19 drehbar gelagert, wobei die Achsstücke 19 an der Unterseite 29 des Korbes 23 befestigt sind. Die als Schlaufen gestalteten U-förmigen Achsstücke 19 sind nur mit ihren Schenkeln 20 am Korb 23 befestigt, während sich ihre Verbindungsabschnitte 21 in einem Abstand zum Korb 23 befinden und auf einer gemeinsamen, quer zur Fahrtrichtung sich erstreckenden Achse 51 angeordnet sind. An jedem Verbindungsabschnitt 21 ist je ein Arm 54 des Halteteils 52 so eingehängt, dass es (52) sich um die gemeinsame Achse 51 schwenken lässt. Wie bereits in Fig. 1 erwähnt, können bei diesem Ausführungsbeispiel auch zwei Halteteile 52 in Form von Ketten oder Seilen, die entsprechende, dem Fachmann geläufige Verbindungsmittel aufweisen, an den Achsstücken 19 befestigt sein. Die Erfindung lässt natürlich die Möglichkeit offen, andere Verbindungsmittel zwischen Halteteil 52 und Achsstücken 19 bzw. Korb 23 vorzusehen. So bieten sich z.B. Scharniere an, wobei je zwei Scharnierhälften an der Unterseite 29 des Korbes 23 und die jeweils anderen Scharnierhälften am Halteteil 52 befestigt sein können. Dadurch, dass die Achsstücke 19, Scharniere oder sonstigen bekannten Lager- oder Verbindungselemente am hinteren Korbende, bevorzugt jedoch an der Unterseite 29 des Korbes 23 angeordnet sind, befinden sie sich ausserhalb jenes Raumes den der Korb 23 eines zweiten Einkaufswagens 1' benötigt, wenn er in den Korb 23 eines vorausbefindlichen Einkaufswagens 1 eingeschoben wird. Der Korb 23 des hinteren Einkaufswagens 1' befindet sich immer in nichtstörender Weise über den Achsstücken 19, Scharnieren oder anderen Verbindungs- oder Lagermitteln. In Fig. 6 ist der Einkaufswagen 1 nur zur Hälfte gezeichnet.

In Anlehnung an Fig. 3 zeigt Fig. 7 in perspektivischer Ansicht einen Einkaufswagen 1, dessen Fahrgestell 3 im wesentlichen aus zwei nach oben gekrümmten Trägern 11 besteht. Am rückwärtigen Fahrgestellende befindet sich die Ablage 30, bestehend aus einem Schwenkteil 31 und aus einem Halteteil 52. Das Schwenkteil 31 besitzt zwei Streben 37, die mit ihren unteren Enden 38 um eine gemeinsame waagrechte Achse 50 drehbar an je einer an jedem Träger 11 befindlichen Lasche 18 gelagert sind. Die Streben 37 sind an ihrem oberen Ende 39 durch eine Querverstrebung 34 verbunden, die beispielsweise aus mindestens einem Querdraht gebildet ist. An den oberen Enden 39 der Streben 37 befinden sich seitliche, in Fahrtrichtung verlaufende Anschläge 40. Das Schwenkteil 31 weist einen Ablageabschnitt 41 auf, der ausgehend von der Querverstrebung 34 durch beispielsweise zwei, zwischen den Streben 37 befindlichen Drähten gebildet, zuerst nach unten strebt und dann ein Stück weit leicht ansteigend in Fahrtrichtung weiterverläuft. Das vordere Ende 42 des Ablageabschnittes 41 ist in je einer länglichen Führung 53 schiebeführungsartig gehalten, wobei die Führungen 53 dem Halteteil 52 angehören. Das Halteteil 52 ist durch die Führungen 53 und die Führungen 53 verbindende Querstäbe 55 gebildet. Das Halteteil 52 ist ebenfalls um eine beispielsweise durch ein Achsstück 19 gebildete waagrechte Achse 51 drehbar am Fahrgestell 3 oder am Korb 23 befestigt, wobei diese waagrechte Achse 51 höher angeordnet ist, als die Achse 50 des Schwenkteiles 31. Die Ablage 30 lässt sich somit aus einer raumsparenden Nichtgebrauchslage, in der sie an den Trägern 11 anliegt, in die wie in der Zeichnung dargestellten Gebrauchslage klappen und umgekehrt, mittels der Träger 11 eines rückwärtigen Einkaufswagens 1', der beim Ineinanderschieben zweier Einkaufswagen 1, 1' an die Querverstrebung 34 der vorausbefindlichen Ablage 30 anstösst, in die Nichtgebrauchslage drücken.

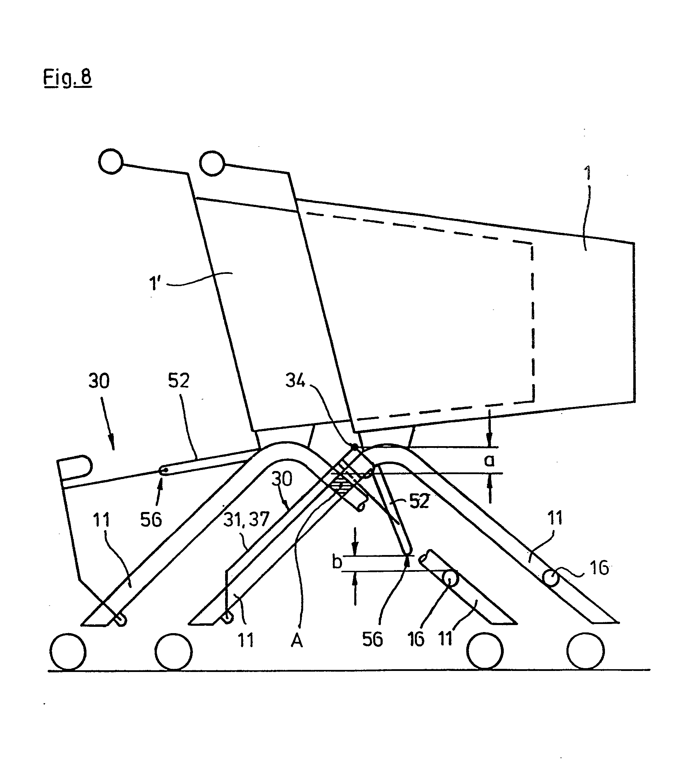

In Fig. 8 sind in Seitenansicht zwei Einkaufswagen 1, 1' entsprechend Fig. 7 in ineinandergeschobenem Zustand dargestellt. Beim hinteren Einkaufswagen 1' ist die Ablage 30 in Gebrauchslage geklappt, während sie sich beim vorderen Einkaufswagen 1, im Bild rechts, in Ruhelage befindet. Man erkennt in der Zeichnung deutlich, dass sich deren Träger 11 im ineinandergeschobenen Zustand der Einkaufswagen 1, 1' schneiden. Die Schnittfläche A ist durch Schraffur gekennzeichnet. Man erkennt in der Zeichnung ferner, dass die Streben 37 des Schwenkteiles 31 des vorderen Einkaufswagens 1 in etwa entlang der hinteren Schenkel 15 nach oben verlaufen und zwar so weit, dass die am Ende der Streben 37 befindlichen Querverstrebung 34 um das Mass a höher angeordnet ist, als die Schnittfläche A. Dies bedeutet, dass die Querverstrebung 34, die sich bei ungünstiger Plazierung ja sperrend für den rückwärtigen Einkaufswagen 1' in den Weg stellen würde, ausserhalb jenes Raumes angeordnet ist, den der rückwärtige Einkaufswagen 1' beim Einschiebevorgang benötigt. Ebenso ist die vordere Querstrebe 16 um das Mass b unterhalb des hinteren Endes 56 des Halteteiles 52 am Fahrgestell 3 befestigt. Das Halteteil 52 ist in Nichtgebrauchslage der Ablage 30 nach unten gerichtet. Dadurch ist es möglich, mehrere Einkaufswagen 1, 1' ineinander zu schieben, oder aber den jeweils hintersten Einkaufswagen 1' aus einem Stapelverbund zu entnehmen, ohne dass die vordere Querstrebe 16 am nach unten gerichteten Halteteil 52 hängen bleibt.

**Patentansprüche**

1. Stapelbarer Einkaufswagen (1), im wesentlichen bestehend aus einem Fahrgestell (3) und einem auf dem Fahrgestell (3) aufgesetzten, eine Schiebeeinrichtung (28) aufweisenden Korb (23), dessen Rückwand (24) in das Korbinnere verschwenkbar ist, wobei an dem der Schiebeeinrichtung (28) zugeordneten Ende des Einkaufswagens (1) eine aus einer Nichtgebrauchslage in eine rückwärtige Gebrauchslage und umgekehrt bewegbare, mit einer Abstellfläche ausgestattete Ablage (30) zum Abstellen grösserer Gegenstände vorgesehen ist, gekennzeichnet durch folgende Merkmale:
a) die Ablage (30) besteht aus einem Schwenkteil (31) und aus wenigstens einem mit dem Schwenkteil (31) verbundenen Halteteil (52),
b) das Schwenkteil (31) weist einen Ablageabschnitt (41) auf,
c) der Ablageabschnitt (41) ist entweder starr oder bewegbar am Schwenkteil (31) angeordnet,
d) das Schwenkteil (31) ist auf einer quer zur Fahrtrichtung angeordneten Achse (50) drehbar gelagert,
e) die Achse (50) befindet sich am rückwärtigen Ende (4) des Einkaufswagens (1),
f) das Halteteil (52) ist entweder als ein in sich starres, oder als flexibles Teil gestaltet und am Fahrgestell (3) oder am Korb (23) beweglich angeordnet,
g) der Ablageabschnitt (41) und das Halteteil (52) bilden zusammen entweder eine Schiebeführung oder ein Gelenk,
h) die Abstellfläche ist entweder durch den Ablageabschnitt (41) und das wenigstens eine Halteteil (52), oder durch den Ablageabschnitt (41) und durch einen am Fahrgestell (3) angeordneten Querstab (10) gebildet,
i) die Ablage (30) befindet sich ausserhalb jenes Raumes den der Korb (23) eines rückwärtigen Einkaufswagens (1') benötigt, wenn er in den Korb (23) eines vorausbefindlichen Einkaufswagens (1) eingeschoben wird.
2. Stapelbarer Einkaufswagen nach Anspruch 1, gekennzeichnet durch folgendes Merkmal: die waagrechte Achse (50) ist durch einen die Träger (7) verbindenden Querstab (9) gebildet.
3. Stapelbarer Einkaufswagen nach Anspruch 1 oder 2, gekennzeichnet durch folgendes Merkmal: die waagrechte Achse (50) ist höher angeordnet, als der vordere Bereich (5) des Fahrgestelles (3).
4. Stapelbarer Einkaufswagen nach einem der Ansprüche 1 bis 3, gekennzeichnet durch folgendes Merkmal: der Ablageabschnitt (41) ist in Gebrauchslage im rechten Winkel zur Rückwand (24) angeordnet.
5. Stapelbarer Einkaufswagen nach einem der Ansprüche 1 bis 4, gekennzeichnet durch folgendes Merkmal: die Bewegbarkeit des Ablageabschnittes (41) erfolgt um eine waagrechte Achse.
6. Stapelbarer Einkaufswagen nach einem der Ansprüche 1 bis 5, gekennzeichnet durch folgendes Merkmal: das Schwenkteil (31) weist an seinem oberen Ende (33) seitliche Anschläge (40) auf.
7. Stapelbarer Einkaufswagen nach einem der Ansprüche 1 bis 6, gekennzeichnet durch folgendes Merkmal: das Halteteil (52) ist an einem eine waagrechte Achse (51) bildenden Querstab (10) drehbar befestigt.
8. Stapelbarer Einkaufswagen nach Anspruch 7, gekennzeichnet durch folgendes Merkmal: der Querstab (10) verbindet die Stützen (7) des Fahrgestelles (3).
9. Stapelbarer Einkaufswagen nach einem der Ansprüche 1 bis 8, gekennzeichnet durch folgende Merkmale: das Halteteil (52) weist eine Führung (53) auf, in welcher der Ablageabschnitt (41) entlang der Schieberichtung des Einkaufswagens (1) schiebebeweglich geführt ist.
10. Stapelbarer Einkaufswagen nach einem der Ansprüche 1 bis 9, gekennzeichnet durch folgendes Merkmal: das Halteteil (52) ist in Gebrauchslage im rechten Winkel zur Rückwand (24) angeordnet.
11. Stapelbarer Einkaufswagen nach einem der Ansprüche 1 bis 10, gekennzeichnet durch folgende Merkmale: das Halteteil (52) ist an zwei an der Unterseite (29) des Korbes (23) befindlichen Achsstücken (19) gelagert, wobei die Achsstücke (19) Verbindungsabschnitte (21) aufweisen, die auf einer gemeinsamen, quer zur Schieberichtung verlaufenden Achse (51) angeordnet sind.
12. Stapelbarer Einkaufswagen nach einem der Ansprüche 1 bis 11, gekennzeichnet durch folgendes Merkmal: das Halteteil (52) ist als Gitterrost, oder durch wenigstens ein Seil oder eine Kette gestaltet.
13. Stapelbarer Einkaufswagen nach einem der Ansprüche 1 bis 13, gekennzeichnet durch folgendes Merkmal: jedes Halteteil (52) ist in Nichtgebrauchslage der Ablage (30) höher angeordnet, als der vordere Bereich (5) des Fahrgestelles (3) oder dessen Querstrebe (16).
14. Stapelbarer Einkaufswagen nach einem der Ansprüche 1 bis 13, gekennzeichnet durch folgende Merkmale: die Ablage (30) liegt in Nichtgebrauchslage an den Trägern (7 oder 11) an, wobei wesentliche Teile der Ablage (30) in dem von den Trägern (7, 8) oder (11) umgrenzten Raum angeordnet sind.

15. Stapelbarer Einkaufswagen nach einem der Ansprüche 1 bis 14, gekennzeichnet durch folgende Merkmale: die Schenkel (14, 15) der Träger (11) streben in verschiedenen Richtungen grösstenteils oder ausschliesslich schräg nach unten, wobei in Nichtgebrauchslage der Ablage (30) die Querverstrebung (34) des Schwenkteiles (31) höher angeordnet ist, als die sich in Seitenansicht ergebende Schnittfläche A der Träger (11) zweier ineinandergeschobener Einkaufswagen (1, 1').

## Claims

1. Stackable shopping trolley (1), essentially consisting of a running frame (3) and a basket (23) which is placed onto the running frame (3) and exhibits a pushing device (28), the rear wall (24) of which basket can be swivelled into the interior of the basket, in which arrangement a rest (30) for storing relatively large objects and equipped with a storage surface, and which can be moved from a position of non-use into a rear position of use and vice versa, is provided at the end of the shopping trolley (1) associated with the pushing device (28), characterized by the following features:
a) the rest (30) consists of a swivel part (31) and of at least one holding part (52) which is connected to the swivel part (31),
b) the swivel part (31) exhibits a rest section (41),
c) the rest section (41) is either rigidly or movably arranged at the swivel part (31),
d) the swivel part (31) is rotatably supported on a shaft (50) which is arranged transversely with respect to the running direction,
e) the shaft (50) is located at the rear end (4) of the shopping trolley (1),
f) the holding part (52) is either designed as an inherently rigid or as a flexible part and movably arranged at the running frame (3) or at the basket (23),
g) the rest section (41) and the holding part (52), together form either a sliding guide or a hinge,
h) the storage surface is either formed by the rest section (41) and at least one holding part (52), or by the rest section (41) and by a transverse rod (10) arranged at the running frame (3),
i) the rest (30) is located outside the space needed by the basket (23) of a rear shopping trolley (1') when it is pushed into the basket (23) of a shopping trolley (1) located in front.

2. Stackable shopping trolley according to Claim 1, characterized by the following feature: the horizontal shaft (50) is formed by a transverse rod (9) joining the carriers (7) of the running frame (3).

3. Stackable shopping trolley according to Claim 1 or 2, characterized by the following feature: the horizontal shaft (50) is arranged to be higher than the front area (5) of the running frame (3).

4. Stackable shopping trolley according to one of Claims 1 to 3, characterized by the following feature: the rest section (41) is arranged at a right angle to the rear wall (24) in the position of use.

5. Stackable shopping trolley according to one of Claims 1 to 4, characterized by the following feature: the movability of the section (41) occurs about a horizontal axis.

6. Stackable shopping trolley according to one of Claims 1 to 5, characterized by the following feature: the swivel part (31) exhibits lateral stops (40) at its upper end (33).

7. Stackable shopping trolley according to one of Claims 1 to 6, characterized by the following feature: the holding part (52) is rotatably attached at a transverse rod (10) forming a horizontal shaft (51).

8. Stackable shopping trolley according to Claim 7, characterized by the following feature: the transverse rod (10) joins the supports (7) of the running frame (3).

9. Stackable shopping trolley according to one of Claims 1 to 8, characterized by the following features: the holding part (52) exhibits a guide (53) in which the rest section (41) is guided to be slidably movable along the direction of pushing of the shopping trolley (1).

10. Stackable shopping trolley according to one of Claims 1 to 9, characterized by the following feature: the holding part (52) is arranged at a right angle to the rear wall (24) in the position of use.

11. Stackable shopping trolley according to one of Claims 1 to 10, characterized by the following features: the holding part (52) is supported at two shaft sections (19) located at the underside (29) of the basket (23), the shaft sections (19) exhibiting connecting sections (21) which are arranged on a common axis (51) extending transversaly with respect to the direction of pushing.

12. Stackable shopping trolley according to one of Claims 1 to 11, characterized by the following feature: the holding part (52) is constructed as a grid or by at least a rope or a chain.

13. Stackable shopping trolley according to one of Claims 1 to 13, characterized by the following feature: in the position of non-use of the rest (30), each holding part (52) is arranged to be higher than the front area (5) of the running frame (3) or its transverse brace (16).

14. Stackable shopping trolley according to one of Claims 1 to 13, characterized by the following features: in the position of non-use, the rest (30) rests against the carriers (7 or 11), essential parts of the rest (30) being arranged in the space bounded by the carriers (7, 8) or (11).

15. Stackable shopping trolley according to one of Claims 1 to 14, characterized by the following features: the legs (14, 15) of the carriers (11) aim downwards in different directions, largely or exclusively obliquely, the transverse bracing (34) of the swivel part (31) being arranged to be higher in the position of non-use of the rest (30) than the plane of intersection A, obtained in a side view, of the carriers (11) of two shopping trolleys (1, 1′) pushed into one another.

## Revendications

1. Chariot à emplettes encastrable (1) constitué essentiellement d'un châssis (3) et d'un panier (23) à dispositif de poussée (28) posé sur le châssis (3) et dont la paroi postérieure (24) peut pivoter vers l'intérieur, ce chariot (1) comportant, à l'extrémité associée au dispositif de poussée (28), un dispositif récepteur (30) présentant une surface de dépôt mobile depuis une position de non-utilisation vers une position d'utilisation située en arrière et inversement, et destinée au dépôt d'objets encombrants, caractérisé par les particularités suivantes:
a) le dispositif récepteur (30) est constitué d'une partie pivotante (31) et d'au moins une partie de retenue (52) reliée à la partie pivotante (31),
b) la partie pivotante (31) présente une section réceptrice (41),
c) la section réceptrice (41) est montée de façon rigide ou mobile sur la partie pivotante (31),
d) la partie pivotante (31) est montée à rotation sur un axe (50) perpendiculaire au sens d'avancement,
e) l'axe (50) est situé à l'extrémité postérieure (4) du chariot à emplettes (1),
f) la partie de retenue (52) a la forme d'un élément rigide en soi ou d'un élément flexible et est montée de façon mobile sur le châssis (3) ou sur le panier (23),
g) la section réceptrice (41) et la partie de retenue (52) forment ensemble un système télescopique ou un système articulé,
h) la surface de dépôt est formée soit par la section réceptrice (41) et la ou les parties de retenue (52), soit par la section réceptrice (41) et une traverse (10) prévue sur le châssis (3), et
i) le dispositif récepteur (30) se trouve en dehors de l'espace nécessaire au panier (23) d'un chariot à emplettes suivant (1′) pour son encastrement dans le panier (23) d'un chariot à emplettes (1) situé devant lui.

2. Chariot à emplettes encastrable suivant la revendication 1, caractérisé par la particularité suivante: l'axe horizontal (50) est formé par une traverse (9) reliant les supports (7) du châssis (3).

3. Chariot à emplettes encastrable suivant la revendication 1 ou 2, caractérisé par la particularité suivante: l'axe horizontal (50) est disposé plus haut que la zone antérieure (5) du châssis (3).

4. Chariot à emplettes encastrable suivant l'une quelconque des revendications 1 à 3, caractérisé par la particularité suivante: dans la position d'utilisation, la section réceptrice (41) forme un angle droit avec la paroi postérieure (24).

5. Chariot à emplettes encastrable suivant l'une quelconque des revendications 1 à 4, caractérisé par la particularité suivante: la section réceptrice (41) est mobile autour d'un axe horizontal.

6. Chariot à emplettes encastrable suivant l'une quelconque des revendications 1 à 5, caractérisé par la particularité suivante: la partie pivotante (31) présente des butées latérales (40) à son extrémité supérieure (33).

7. Chariot à emplettes encastrable suivant l'une quelconque des revendications 1 à 6, caractérisé par la particularité suivante: la partie de retenue (52) est fixée à pivotement à une traverse (10) formant un axe horizontal (51).

8. Chariot à emplettes encastrable suivant la revendication 7, caractérisé par la particularité suivante: la traverse (10) relie les supports (7) du châssis (3).

9. Chariot à emplettes encastrable suivant l'une quelconque des revendictions 1 à 8, caractérisé par les particularités suivantes: la partie de retenue (52) présente une coulisse (53), dans laquelle la section réceptrice (41) est guidée à coulissement dans le sens de poussée du chariot à emplettes.

10. Chariot à emplettes encastrable suivant l'une quelconque des revendications 1 à 9, caractérisé par la particularité suivante: dans la position d'utilisation, la partie de retenue (52) forme un angle droit avec la paroi postérieure (24).

11. Chariot à emplettes encastrable suivant l'une quelconque des revendications 1 à 10, caractérisé par les particularités suivantes: la partie de retenue (52) tourillonne sur deux bouts d'axe (19) situés à la face inférieure (29) du panier (23), les bouts d'axe (19) présentant des sections de liaison (21) qui sont disposées sur un axe (51) commun perpendiculaire à la direction de poussée.

12. Chariot à emplettes encastrable suivant l'une quelconque des revendications 1 à 11, caractérisé par la particularité suivante: la partie de retenue (52) est formée par une grille ou par au moins un câble ou une chaîne.

13. Chariot à emplettes encastrable suivant l'une quelconque des revendications 1 à 13, caractérisé par la particularité suivante: dans la position de non-utilisation du dispositif récepteur (30), chaque partie de retenue (52) est située plus haut que la zone antérieure (5) du châssis (3) ou que sa traverse (16).

14. Chariot à emplettes encastrable suivant l'une quelconque des revendications 1 à 13, caractérisé par les particularités suivantes: dans la position de non-utilisation, le dispositif récepteur est appliqué contre les supports (7 ou 11), les parties essentielles du dispositif récepteur (30) étant situées dans l'espace délimité par les supports (7, 8) ou (11).

15. Chariot à emplettes encastrable suivant l'une quelconque des revendications 1 à 14, caractérisé par les particularités suivantes: les branches (14, 15) des supports (11) s'étendent dans plusieurs directions, principalement ou exclusivement en oblique vers le bas, tandis que dans la position de non-utilisation du dispositif récepteur (30), la traverse (34) de la partie pivotante (31) est située plus haut que l'aire d'intersection A, vue en élévation de côté, des supports (11) de deux chariots à emplettes encastrés (1, 1′).

Fig.1

Fig. 2

Fig. 3

Fig. 4

Fig. 5

0 141 398

**Fig. 6**

54  51  19  20  1
31  52  21  20  23

**Fig. 7**

23
28
24
39 40 30  13  52, 55  19, 51  5
34  41  53  16  14  12
37  53  13
42  40  17
50  11, 15  31  52  39  11
18  39
6  12  15  3
37  18  1
38  50
12
4  6

15

Fig. 8